# EUROPEAN PATENT SPECIFICATION

(11) **EP 0 365 729 B1**
(45) Date of publication and mention of the grant of the patent: **13.12.1995**
(21) Application number: 88312408.3
(22) Date of filing: 29.12.1988
(51) Int. Cl.: B32B 29/06, B32B 27/18, H05B 6/64, B65D 81/34, B65D 65/40

(54) **Laminated sheets for microwave heating**
Durch Mikrowellen erhitzbare Verbundfolien
Feuilles stratifiées chauffables par micro-ondes

(30) Priority: 24.10.1988 US 261380
(43) Date of publication of application: 02.05.1990
(73) Proprietor: GOLDEN VALLEY MICROWAVE FOODS INC., Edina Minnesota 55435 (US)
(72) Inventor: Ochocki, Michael J., Minnesota MN 55330 (US)
(74) Representative: Brown, Kenneth Richard

(56) References cited:
- EP-A- 0 251 445
- EP-A- 0 276 654
- EP-A- 0 312 333
- EP-A- 0 336 325
- EP-A- 0 357 008
- US-A- 4 518 651
- US-A- 4 738 882

## Description

The present invention relates to laminated sheets, especially paper and paperboard sheets which convert microwave energy into heat for warming products in a microwave oven.

Foods such as popcorn, pizza that can be heated and, in the case of popcorn, popped quickly in the microwave oven have achieved an astounding degree of popularity in recent months. It is only necessary to place the package in the microwave oven for three or four minutes to obtain a piping hot bag of freshly popped popcorn or a serving of pizza.

Many commerically available heating packages contain a heater or susceptor formed from a thin sheet of a plastic resin such as a polyester film vapor-coated with a semiconductive layer, e.g. aluminum. The coated film is usually bonded to a support such as paper or paperboard. These susceptors require several components and extra processing steps which adds to the complexity and cost of production. Vapor coating and laminating the plastic sheet to the paper or paperboard backing makes the composite structure relatively expensive and requires a substantial investment in processing equipment.

It has also been proposed to coat a paper support sheet with a carbon-containing ink. For example, patent 4,518,651 describes the coating of 18-point board with carbon black suspended in a matrix of a polyester copolymer dissolved in an organic solvent to which is pressed a polyester film under a pressure of 8.6 MPa (1,250 psi) for three minutes. All samples required the application of a substantial amount of pressure in order to be an effective heater. Patent 4,264,668 describes the use of a carbon strip for sealing bags. Carbon particles in the form of powdered coal or carbon black are mixed with a binder such as an acrylate-type binder. Several layers are printed one on top of the other in order to obtain an appropriate resistivity of approximately 6,000 ohms. The carbon black layer is used to seal polyethylene plastic to form two narrow sealed bands when held against a sealing device, e.g. a high frequency transformer that produces a high frequency electric field. The coated sheets are not used for heating in a microwave oven. Once the finished package is formed, no further heating occurs. Moreover, the carbon strips on the edge of the bag are not located appropriately to heat the contents of the package.

The carbon ink formulas described in the foregoing patents were tried but they did not provide uniform heating. Heating was usually accompanied by scorching, popping, arcing and burning. Moreover, the use of high pressure to form a product is unacceptable.

It was found, for example, that when carbon was used alone with a standard ink vehicle,burning and uncontrolled temperature rise would occur with a likelihood of burning the package and the product being heated. It was also found that when carbon was mixed with an acrylic vehicle the resulting susceptor would burn up a package in about one minute. The package would start to brown at about 204°C (400°F) and quickly thereafter burn which is, of course, unacceptable. Once the package begins to carbonize, this facilitates further heating and accelerates the burning reaction which causes burning to occur at a faster rate. This can be referred to as runaway heating.

In an alternative proposal, EP-A-0276654 describes receptor films for the microwave crisping and browning of foodstuffs, comprising card or plastics sheet which is coated with a liquid composition containing interactive particles which is then dried to a film and covered with a protective layer of heat-curable varnish. Still further, EP-A-0357008 proposes a microwave interactive heating element of paper or paperboard coated with a composition of finely divided carbon, a finely divided metallic component, a powdered inert solid temperature moderator and a binder.

An important aspect of the present invention is to provide a microwave susceptor coating which is capable of being applied at normal pressure as an ink and which, upon exposure to microwave energy, will produce a uniform heat without unacceptable arcing, popping, sparking or burning. The invention seeks also to obtain uniformity of heating in different portions of a microwave heating package and also from one sample to another. The heating composition must be able to be coated, preferably by conventional printing directly onto a backing such as paper or paperboard without the requirement for multiple superimposed printed coatings, plastic sheets or high pressure which increase production costs and capital requirements.

To be useful, the susceptor composition must have all the qualities of a good printing ink including the proper rheological properties: viscosity, dilatency and thixotropy, to avoid problems such as misting, splattering or dripping from freshly printed surfaces moving at high speed and must also transfer easily from the supply roll to the printing roll. While the compositions suited for the present invention can be printed by means of a variety of printing processes such as offset, intaglio and letterpress, it is particularly desirable for the composition to be applied by flexography or gravure printing. The microwave interactive heating composition, which for convenience will hereafter sometimes be referred to as ink, must also have other desirable ink qualities such as good film strength, rub resistance, flexibility and ability to dry quickly, and should be nontoxic both in the pressroom and as a finished coating. It should also have good covering characteristics and be sufficiently stable to resist settling or other degradation during use. It should produce coatings of uniform thicknesses and be able to form a continuous or interrupted coating, e.g. a coating with a multiplicity of openings or uncoated spots within a coated area.

In accordance with a first aspect of the invention, there is provided a laminate for use in heating a product in a microwave oven, comprising (i) as a backing sheet a substrate formed from material that is transparent to microwave energy, (ii) a printed susceptor layer as a coating lamina on the backing sheet, this lamina comprising a cured dispersion of an organic printing ink vehicle to serve as a film forming matrix in which is uniformly and homogenously suspended at least two types of dispersed and intermixed particles, one comprising electrically conductive microwave interactive carbon particles and the other comprising electrically nonconductive attenuator particles that are non-interactive with microwave energy and which comprise a suspended mineral powder for dissipating, spreading or modulating the energy received by the conductive particles, and (iii) either (a) a microwave transparent sheet material bonded over the susceptor layer to enclose the susceptor layer between the substrate and the overlying sheet material, or (b) a heat insulating coating imprinted upon a surface of the laminate in alignment with the susceptor layer to reduce the loss of heat from the susceptor and to maximise the transmission of heat to the product to be heated.

In accordance with this first aspect of the invention, a coated and/or laminated sheet material such as paper or paperboard that is transparent to microwave energy bears a printed susceptor layer or coating. The susceptor coating comprises a dispersion of a fluid organic printing ink vehicle base in which is uniformly and homogenously suspended two separate and distinct types of dispersed particles. One is electrically conductive microwave interactive carbon particles. The other is electrically nonconductive non-microwave interactive mineral attenuator particles for dissipating, spreading and/or modulating the energy absorbed and converted into heat by the conductive particles. The laminate has a third layer, which is defined above under item (iii).

Thus the dispersed phase comprises two types of uniformly intermixed suspended particles of different compositions. Only the carbon interacts with microwave energy directly. Both suspended materials are composed of microscopic size particles that remain dispersed or in suspension in the ink vehicle until used. It is important that both kinds of particles are dispersed in the same vehicle rather than, for example, layered one on top of the other to achieve the desired results. While the precise method of interaction is not known with certainty, it is speculated that the suspended attenuation particles prevent localized energy buildup and consequent runaway heating. They may also prevent agglutination of the carbon particles to thereby provide a more uniform dispersion and more uniform heating characteristics.

In accordance with a second aspect of the invention, there is provided a laminate for the microwave heating of a packaged product to be heated in a microwave oven comprising (a) at least two supporting sheets of dielectric material one of which serves as a susceptor substrate and (b) a microwave susceptor composed of a microwave inductive substance-containing ink layer printed onto one of the sheets over a selected portion of its surface in alignment with the packaged product to be heated, the sheets being joined together face-to-face with the ink layer located between the sheets to provide a bilayer laminate of dielectric material as a support structure for the ink layer, the ink layer including electrically non-conductive attenuator particles that are non-interactive with microwave energy to inhibit undesired over-heating, sparking or burning when the susceptor is exposed to microwave energy.

According to this latter aspect of the invention, therefore, a laminate is provided for microwave heating of packaged products that are to be heated in a microwave oven and which includes at least two supporting sheets of dielectric material. The dielectric material is typically paper, paperboard or plastics film. One of the dielectric sheets serves as a susceptor substrate. A microwave susceptor composed of an ink layer containing a microwave inductive substance and electrically non-conductive attenuator particles is printed onto one of the sheets over a selected portion of its surface in alignment with the packaged product to be heated. The sheets are joined together in face-to-face relationship with the ink layer located between the sheets to provide a bilayer laminate of dielectric material as a support structure for the ink layer which has insufficient strength to be self-supporting. During operation heat is transferred to the product, e.g. a food product being heated, usually by conduction through one of the sheets which serves as a structural support for the layer of ink. The attenuator particles inhibit undesired over-heating, sparking and burning and this prevents spoiling of the food product.

In accordance with the present invention a printed or coated sheet is provided which consists of a sheet of paper, paperboard, plastics film or other flexible microwave transparent sheet material in which the sheet is printed with a special printing ink adapted to produce heat when exposed to microwave energy in a microwave oven. The substrate or backing sheet material can, for example, be 6.8 to 22.7 kg (15 to 50-pound) kraft paper or paperboard such as 18 or 20 point paperboard, plastic film such as 76 »m (3 mil) polyester, nylon or cellophane. The printed coating comprises a microwave susceptor composed of a fluid organic and resinous printing ink vehicle or film former that serves as a base or matrix to hold the ink together and to the underlying substrate. The vehicle can comprise any suitable ink vehicle such as an acrylic or maleic resin, e.g. maleic rosin ester, polyvinyl acetate, protein or soluble shellac. The solvent can be water with or without an amine such as ammonia. A variety of other spirit based ink vehicles known to the art can also be used; however, water based inks are preferred. Suitable water based inks can be alkaline solutions of acidic resins. Upon drying the resins become water insoluble by evaporation of ammonia or other volatile amines. The properties depend upon the type of acidic resin used. Many suitable carboxylated or acid-containing resins can be used. Four general types of ammonia soluble resins can be employed including acrylic, protein, shellac and maleic resins. The best heat resistance is provided by acrylic and protein resins, and the best printability and drying is provided by acrylic resins. The shelf life and dispersion ability are also better with acrylic resins and accordingly, an acrylic resin vehicle is preferred but is not essential.

As the ink dries the acrylic particles present in the emulsion coagulate or flow together to form a film.

The ink vehicle typically contains about 30% resin solids and about 70% water. The ink vehicle when it consists of an acrylic resin can be present in the amount of about 50% to 80% by weight, typically about 65% to 70% by weight.

Uniformly and homogenously suspended in the vehicle which serves as a matrix or binder are at least two kinds of dispersed particles. The first is an electrically conductive particle comprising carbon optionally together with suspended metal particles such as aluminum flakes in a minor amount, say 0% to 20% of the electrically conductive particles.

The conductive carbon particles dispersed in the vehicle should be of a suitable ink-grade carbon black such as channel black, furnace black or lamp black. While various suitable carbon blacks can be used, one suitable carbon black is 90F Black (Inmont Printing Inks Division of BASF Corporation, Chicago, Illinois [I.P.I.]). Approximately one part of carbon black is present for each four or five parts of film former (wet basis).

Also dispersed in the vehicle and uniformly and homogenously intermixed with the electrically conductive particles are particles of an electrically nonconductive microwave non-interactive inorganic attenuator for dissipating, spreading out or modulating the energy received by the conductive particles. The attenuator particles can comprise any of a variety of nonconductive mineral powders of fine particle size suited for dispersion in an ink vehicle. Among such attenuators are powdered titanium dioxide, clay, zinc oxide, calcium carbonate, sodium silicate, barium sulfate, aluminum oxide or aluminum sulfate, and for nonfood items, antimony oxide or white lead. These attenuators can be used in an amount preferably from about two-thirds to about six times the amount of carbon black present. The attenuator is present in a sufficient amount to prevent localized overheating, sparking and burning. It appears to modulate the action of the carbon black and is thought to render the dispersion of the carbon black more uniform and to provide less opportunity for carbon particles agglutination. In addition, the presence of the attenuator between the carbon black particles will tend to produce electron tunneling as a result of the fluctuating electrical field produced by the microwave energy and will reduce the bulk resistivity.

Both kinds of suspended particles are preferably dispersed in the fluid ink vehicle conventionally as by means of a ball mill, rod mill or roller mill until uniform dispersion is obtained as will be understood by those skilled in the printing art. Only enough of the attenuator needs to be provided to reduce the tendency for hot spots to occur in the finished susceptor target. If too much is present the heating effect will be reduced, but if too little is present, sparking or hot spots may appear. While the particle size is not considered critical, carbon particles and attenuator particles having a particle size on the order of about 10 to about 1,000 nm is typical. Other electrically conductive particles such as metal particles, e.g. flakes of aluminum, bronze or nickel, can also be used in a minor amount with the carbon particles.

Minor amounts of known ink additives can be provided for improving flow and drying properties as well as the properties of the finished ink film. An amine such as ammonia or an organic amine of any suitable known composition useful in printing inks can be employed to form a stable vehicle suspension. Suitable amines include any of a variety of organic amine compounds characterized by reacting with the acid group of the resin present. The organic amines are slower evaporating than the ammonia sometimes used; consequently, their presence retards the drying time to some degree. One suitable amine is morpholine (I.P.I.) in the amount of about 0% to 3% by weight. As a plasticizer and emulsifier, proplyene glycol can also be used in an amount from about 0% to 5%. A small amount of wax such as polyethylene wax or other suitable known composition can also be employed as an agent for promoting transfer and to give the finished ink film desired characteristics. Polyethylene wax can be used in an amount of from about 0% to 10%.

The invention will now be described in greater detail by way of example only with reference to the accompanying drawings, in which:
Fig. 1 is a perspective view showing sheet material being printed and laminated in accordance with one form of the invention;
Fig. 2 is a plan view of a sheet printed in accordance with another form of the invention;
Fig. 3 is similar to Fig. 2 but shows printing with a different pattern;
Fig. 4 is a sectional view taken on line 4-4 of Fig. 1 with the thickness of the layers exaggerated for clarity of illustration; and
Fig. 5 is a plan view of another form of printed sheet in accordance with the invention.

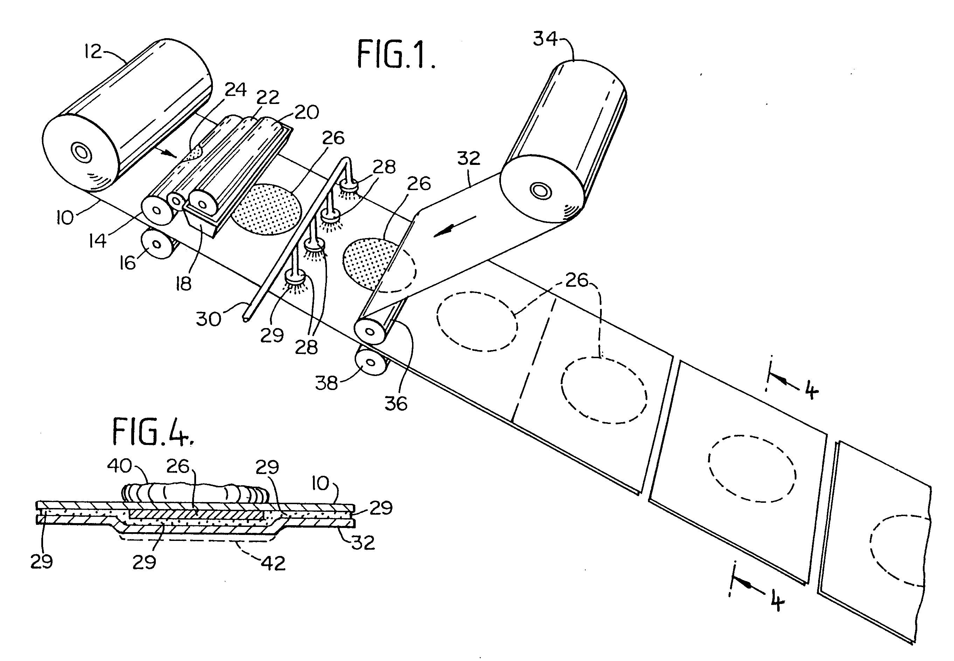

As shown in Figure 1, a web 10 is unwound from supply roll 12, from left to right in the drawings, between a printing roll 14 and backing roll 16. Ink present in supply pan 18 is fed from pickup roll 20 to transfer roll 22 and then to printing roll 14. The printing rolls 14-22 merely illustrate diagrammatically the printing process since any of a variety of methods can be used including letterpress, gravure, flexographic, planographic, intaglio and others. Of these methods, flexographic and gravure printing are preferred. It will be seen that the ink carried in the supply pan 18 is transferred at 24 as a circular area in this case on the printing roll 14 and from there is transferred to the paper to provide a circular or target-shaped printed susceptor 26. The ink film 26 is then dried conventionally as by means of infrared and/or hot air dryers (not shown) or other suitable drying methods known to the art, and adhesive such as a polyvinyl acetate adhesive is applied in any suitable way as by means of glue application rollers or by means of a sprayer, shown diagrammatically in this case as four spray heads 28 to which glue is supplied under pressure through a supply line 30. The glue can comprise any of a variety of suitable adhesives known to the art. Typical adhesives include polyvinyl acetate emulsion and polyvinyl acetate copolymer emulsion adhesives such as Duracet and Elektromek adhesives by Franklin International and Elektromek Company, respectively.

While the glue supplied by the spray heads 28 is still in a fluid state, a web of paper or other microwave transparent dielectric material, e.g. 13.6 kg (30-pound) kraft paper 32 is unwound from supply roll 34 and passes between rolls 36 and 38 which laminate the webs 32 and 10 together to form a composite sheet. As shown in Figure 4, this composite sheet includes a paper sheet 10 in contact with an article to be heated such as a food article 40, the printed susceptor lamina 26, adhesive layer 29 and a second nonconductive sheet 32. If desired, there is also printed onto the sheet 32 in vertical alignment with the printed susceptor 26 an optional layer of heat insulating coating 42. The coating 42 can be a relatively thick clay coating layer which furnishes heat insulating properties for reducing the transmission of heat developed by the susceptor 26 away from the food product 40, thereby rendering the susceptor 26 more efficient in operation so that more of the heat produced is transferred to the food from the susceptor during the heating operation. The clay coating 42 can comprise any suitable commercially available clay coating for paper or a white printing ink with a relatively high load of clay and a compatible white pigment.

When the susceptor 26 is to be used in a package for heating microwave popcorn, the printed susceptor 26 can be a solidly printed disc about 108 mm (4¼ inches) in diameter is printed at a weight of about 0.45-3.6 kg (1-8 pounds) and more typically 1.8-2.7 kg (4-6 pounds) per ream (279 m²/3,000 square feet). When the susceptor coatings provide a lamina of 0.9 kg (two pounds) per ream, the conductivity is usually between about 2500 and 10,000 ohms per square and most preferably between about 3000 and 5000 ohms per square. It is preferred to apply the ink film as a relatively thin layer by thinning the fluid ink to a fairly fluid consistency, e.g. between about 18 and 22 seconds in a #2 Zahn cup. Since the engraved roll 24 will apply a certain volume of ink per unit area, by providing smaller openings on the surface of the roll a relatively thin ink film can be applied with a carbon content in the dried ink film on the order of 40% to 45%. It will be understood that the viscosity of the fluid ink controls the basis weight of the ink film applied to the paper sheet 10. More or less water or other solvent can be used to control the viscosity. Thus, by adding more water the basis weight can be reduced.

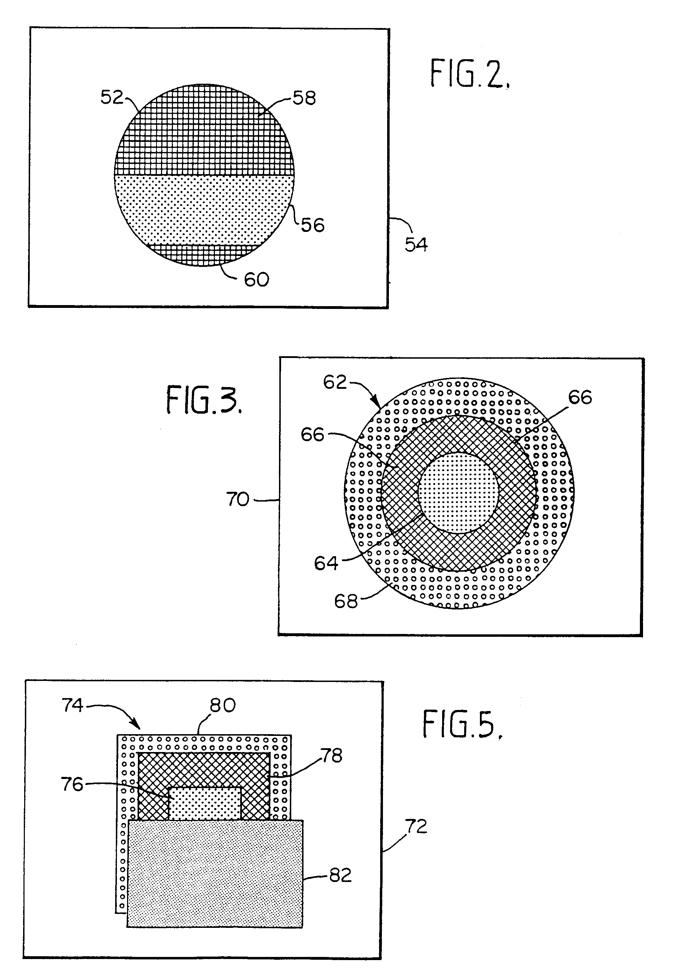

Refer now to Figure 2 which illustrates another form of susceptor 52 printed onto a paper support sheet 54. The susceptor 52 in this case comprises a circular disc of about 108 mm (4¼ inches) in diameter composed of solidly printed bar portion 56 and two half-printed grid patterned portions 58 and 60 which comprise approximately 50% open unprinted areas in the form of small unprinted circles or squares surrounded by grid lines. By using this form of the invention a greater amount of heat can be provided by the printed bar 56 precisely where the food is located with reduced amounts being provided at 58 and 60 on either side of the mass of food to supply additional heat but to prevent runaway or excessive heating at the periphery or in areas where the food is likely to come out of contact with the susceptor 52.

Refer now to Figure 3 which illustrates a further modified form of the invention which in this case comprises a circular or target-shaped printed susceptor 62 having a solidly printed center section 64, a circular printed grid 66 that is 80% printed and 20% open area. Surrounding that is an additional circular printed area 68 which is approximately 50% printed dots of about 0.8 mm (1/32 inch) in diameter and 50% open area. Using the susceptor 62, a greater amount of heat can be provided at the center with reduced amounts provided in successive areas proceeding outwardly toward the periphery by virtue of a reduction in the amount of susceptor material printed onto the substrate. In this way the highest temperatures can be achieved at the center of the product being heated where it is most needed by applying a greater amount, with reduced amounts being provided proceeding outwardly toward the periphery of the susceptor 62. This reduces the likelihood of overheating, particularly where the sheet 70 happens to come out of contact with the product at its edge, such as a food product 40 that is being heated.

Refer now to Figure 5 which illustrates still another form of the invention. In this case a paper sheet such as 22.7 kg (50 pound) kraft paper sheet 72 is printed with a susceptor 74 having a square center section 76 that is solidly printed surrounded by a square grid area 78 that is 80% printed and 20% open and an additional peripheral border 80 that is 50% printed and about 50% open. The lower half of susceptor 74 is over-printed with an additional layer of a solidly printed susceptor ink at 82. A greater amount of heating will be provided by the double layer at the bottom with successively reduced amounts of heating provided by the areas 76, 78 and 80. In this way, the amount of heat provided can be tailored to the precise amount of heat required by each portion of the product so that the likelihood of uncontrolled heating is reduced around the periphery of the food product.

The invention will be better understood by reference to the following examples of various ink compositions employed in accordance with the invention. All quantities are expressed on a weight basis. Each example includes the temperature elevation produced by a 102 x 127 mm (4 inch by 5 inch) susceptor lamina heating 60 grams of soy oil above the temperature reached after heating the same amount of oil with no susceptor for 90 seconds in a 1,000 watt oven.

### EXAMPLE 1

| | Percent |
|---|---|
| Carbon (Furnace Black) | 10 |
| Attenuator (TiO₂) | 15 |
| Film Former (Duracet®; Franklin International, Columbus, OH) (Polyvinyl Acetate & water, 66% Solid Resin & 44% water) | 75 |
| | 1̅0̅0̅% |

Water is added to the above listed formula to provide 84% water and 16% solids in the finished ink.
Temperature Increase: 125°F @ 2 lb/ream

### EXAMPLE 2

| | Range | Typical |
|---|---|---|
| Carbon Black (Lampblack) | 2-25 | 14.5 |
| Attenuator (Clay) | 10-15 | 11 |
| Film Former (Acrylic Resin & Water) | 50-80 | 67.5 |
| Emulsifier (Propylene Glycol) | 0-5 | 1 |
| Amine (Morphaline [I.P.I]) | 0-3 | 1 |
| Polyethylene Wax | 0-10 | 5 |
| | | 1̅0̅0̅%̅ |

Water is added to the above listed formula to provide 84% water and 16 % solids in the finished ink.
Temperature Increase: 52°C (126°F) @ 0.25 kg/ream (.55 lb/ream)
In the finished film the carbon content is 48.3% carbon and 51.7% non-carbon solids (solids basis)

### EXAMPLE 3

| | Percent |
|---|---|
| Carbon Black (Graphite) | 11 |
| Zinc Oxide | 25 |
| Film Former (Elektromek®; Elektromek Company; Carlstad, NJ) (Polyvinyl Acetate copolymer wet basis, 66% Solids Resin and 44% water) | 64 |
| | 1̅0̅0̅% |

Water is added to the above listed formula to provide 84% water and 16 % solids in the finished ink.
Temperature Increase: 94°C (201°F) @ 0.75 kg/ream (1.65 lb/ream)

### EXAMPLE 4

| Formulation | Range | Typical |
|---|---|---|
| Carbon Black | 2 - 25 | 8.4 |
| Clay | 5 - 7 | 6.4 |
| Yellow | 2 - 4 | 3.8 |
| Clarion | 6 - 11 | 9.5 |
| Rubine | 4 - 6 | 5.7 |
| Polyethylene Wax | 2 - 3 | 2.9 |
| Slip Compound | .1 - .2 | .2 |
| Propylene Glycol | .5 - .7 | .6 |
| Defoamer | .1 - .2 | .2 |
| Varnish (Maleic resin emulsion in water) | 60 - 63 | 61.8 |
| Amine (Ammonia) | .5 - .7 | .6 |
| % Total Solids | 32 - 34 | 33.6 |
| % Carbon Black | 21 - 31 | 25.0 |

Water is added to the above listed formula to provide 84% water and 16 % solids in the finished ink.
Temperature Increase: 81°C (177°F) @ 2.25 kg/ream (4.95 lb/ream)

### EXAMPLE 5

| Formulation | Range | Typical |
|---|---|---|
| Carbon Black | 2 - 25 | 8.4 |
| Cyan Blue | 12 - 20 | 17.0 |
| Clay | 5 - 7 | 6.4 |
| Alkali Blue | 4 - 7 | 6.3 |
| Polyethylene Wax | 2 - 3 | 2.9 |
| Slip Compound | 0 - 1 | .9 |
| Amine (Ammonia) | .3 - .5 | .4 |
| Defoamer | .1 - .2 | .2 |
| Propylene Glycol | .5 - .7 | .6 |
| Water | .9 - 2 | 1.3 |
| Varnish (Acrylic resin emulsion in water) | 53 - 59 | 55.5 |
| % Total Solids | 33 - 35 | 34.1 |
| % Carbon Black | 21 - 30 | 24.7 |

Water is added to the above listed formula to provide 84% water and 16 % solids in the finished ink.
Temperature Increase: 63°C (146°F) @ 1.86 kg/ream (4.11 lb/ream)

### EXAMPLE 6

| Formulation | Range | Typical |
|---|---|---|
| Carbon Black | 2 - 25 | 8.4 |
| Aluminum Oxide | 5 - 7 | 6.4 |
| Polyethylene Wax | 2 - 3 | 2.9 |
| Amine (Ammonia) | .5 - .7 | .6 |
| Propylene Glycol | .5 - .7 | .6 |
| Polyvinyl Acetate Homopolymer emulsion in water (Duracet®) | 30 - 50 | 42 |
| % Total Solids | 38 - 43 | 40.9 |
| % Carbon Black | 16 - 26 | 20.6 |

Water is added to the above listed formula to provide 84% water and 16 % solids in the finished ink.
Temperature Increase about 53°C (128°F) @ 2.0 kg/ream (4.44 lb/ream)

### EXAMPLE 7

| Formulation | Range | Typical |
|---|---|---|
| Carbon Black | 2 - 25 | 8.4 |
| Barium Sulfate | 5 - 7 | 6.4 |
| Wax | 2 - 3 | 2.9 |
| Amine (Morphaline™) | .5 - .7 | .6 |
| Propylene Glycol | .5 - .7 | .6 |
| Polyvinyl Acetate Copolymer | 30 - 50 | 42 |
| % Total Solids | 37 - 42 | 40.1 |
| % Carbon Black | 17 - 27 | 20.9 |

Water is added to the above listed formula to provide 84% water and 16 % solids in the finished ink.
Temperature Increase about 46°C (115°F) @ 3.57 kg/ream (7.87 lb/ream)

### EXAMPLE 8

| Formulation | Range | Typical |
|---|---|---|
| Carbon Black | 2 - 25 | 8.4 |
| Diarylide Yellow | 8 - 14 | 12.5 |
| Zinc Oxide | .8 - 1.5 | 1.3 |
| Clay (sulfate clay) | 5 - 7 | 6.4 |
| Wax | 3 - 4 | 3.7 |
| Amine (ammonia) | .5 - .7 | .6 |
| Propylene Glycol | .5 - .7 | .6 |
| Shellac dispersion in water | 62 - 64 | 62.9 |
| Defoamer | .1 - .2 | .2 |
| Water | 1 - 2 | 2.0 |
| Compound | .8 - 1.5 | 1.3 |
| % Total Solids | 35 - 39 | 37.8 |
| % Carbon Black | 18 - 28 | 22.3 |

Water is added to the above listed formula to provide 84% water and 16 % solids in the finished ink.
Temperature Increase: 70°C (158°F) @ 2.25 kg/ream (4.95 lb/ream)

### EXAMPLE 9

| Formulation | Range | Typical |
|---|---|---|
| Carbon Black | 2 - 25 | 8.4 |
| Oasis Black | 2 - 4 | 3.8 |
| Calcium Carbonate | 5 - 7 | 6.4 |
| Wax | 2 - 3 | 2.9 |
| Amine | .5 - .7 | .6 |
| Propylene Glycol | .5 - .7 | .6 |
| Varnish (protein water dispersion) | 74 - 79 | 77.4 |
| % Total Solids | 30 - 31 | 30.9 |
| % Carbon Black | 37 - 42 | 39.5 |

Water is added to the above listed formula to provide 84% water and 16 % solids in the finished ink.
Temperature Increase: 80°C (176°F) (after 70 seconds) @ 2.2 kg/ream (4.84 lb/ream)

### EXAMPLE 10

| Formulation | Range | Typical |
|---|---|---|
| Carbon Black | 2 - 25 | 8.4 |
| Metal Powder (aluminum flake 15%, ink vehicle, 85%) | 4 - 7 | 6.3 |
| Zinc Oxide | 5 - 7 | 6.9 |
| Wax | 2 - 3 | 2.9 |
| Amine | .5 - .7 | .6 |
| Propylene Glycol | .5 - .7 | .6 |
| Varnish (acrylic dispersion in water) | 33.75-47.25 | 39.15 |
| % Total Solids | 29.9 -29.94 | 29.916 |
| % Carbon Black | 24.2 -33.90 | 28.11 |

Water is added to the above listed formula to provide 84% water and 16 % solids in the finished ink.
Temperature Increase: 59°C (139°F) @ 1.04 kg/ream (2.29 lb/ream)

### EXAMPLE 11

| | Percent |
|---|---|
| Carbon | 8.7 |
| Clay | 11 |
| Aluminum Sulfate | 11.6 |
| Wax | 5 |
| Morphaline™ | 1 |
| Propylene Glycol | 1 |
| Acrylic Resin dispersion in water (30% water) | 61.7 |

Water is added to the above listed formula to provide 84% water and 16 % solids in the finished ink.
Temperature Increase about 43-46°C (110°F-115°F) @ 1.8 kg/ream (4 lb/ream)

## Claims

1. A laminate for use in heating a product in a microwave oven, comprising (i) as a backing sheet a substrate formed from material that is transparent to microwave energy, (ii) a printed susceptor layer as a coating lamina on the backing sheet, the lamina comprising a cured dispersion of an organic printing ink vehicle to serve as a film forming matrix in which is uniformly and homogenously suspended at least two types of dispersed and intermixed particles, one comprising electrically conductive microwave interactive carbon particles and the other comprising electrically nonconductive attenuator particles that are non-interactive with microwave energy and which comprise a suspended mineral powder for dissipating, spreading or modulating the energy received by the conductive particles, and (iii) (a) a microwave transparent sheet material bonded over the susceptor layer to enclose the susceptor layer between the substrate and the overlying sheet material, or (b) a heat insulating coating imprinted upon a surface of the laminate in alignment with the susceptor to reduce the loss of heat from the susceptor and to maximize the transmission of heat to the product to be heated.

2. A laminate according to claim 1, wherein the substrate and the overlying sheet material both comprise paper or paperboard sheets which are bonded together by means of an adhesive layer and the printed susceptor layer is self-bonded to the substrate paper sheet.

3. A laminate according to any one of claims 1 to 2, wherein the printed susceptor layer has different amounts of ink printed in different areas to provide a greater amount of heating where a greater amount of ink is provided.

4. A laminate according to claim 3, wherein some of the printed areas are in the form of a pattern with open unprinted areas comprising a selected percentage thereof.

5. A laminate according to claim 4, wherein a center portion of the susceptor layer is printed more solidly than a peripheral portion thereof to provide a greater amount of heat at the center and a reduced amount of heat towards the periphery.

6. A laminate according to any one of claims 1 to 5, wherein the printed susceptor layer comprises also metal particles.

7. A laminate according to claim 6, wherein the metal particles comprise flakes of aluminum, bronze or nickel.

8. A laminate according to any one of claims 1 to 7, wherein the attenuator particles are particles of a material selected from TiO₂, ZnO₂, clay, calcium carbonate, sodium silicate, barium sulfate, aluminum oxide, aluminum sulfate, white lead and antimony oxide.

9. A laminate according to any one of claims 1 to 8, wherein the printing ink vehicle is a fluid dispersion of a solvent and a member selected from acrylic resin, maleic resin, protein and shellac.

10. A laminate according to claim 9, wherein the vehicle contains a minor amount of a polyhydric alcohol, a wax and an amine to modify the characteristics of the ink.

11. A laminate according to any one of claims 1 to 10 wherein the overlying sheet material carries the heat insulating coating.

12. A laminate according to claim 11, wherein the insulating coating layer is of clay.

13. A laminate for the microwave heating of a packaged product to be heated in a microwave oven comprising (a) at least two supporting sheets of dielectric material one of which serves as a susceptor substrate and (b) a microwave susceptor composed of a microwave inductive substance-containing ink layer printed onto one of the sheets over a selected portion of its surface in alignment with the packaged product to be heated, the sheets being joined together face-to-face with the ink lyaer located between the sheets to provide a bilayer laminate of dielectric material as a support structure for the ink layer, the ink layer including electrically non-conductive attenuator particles that are non-interactive with microwave energy to inhibit undesired over-heating, sparking or burning when the susceptor is exposed to microwave energy.

14. A laminate according to claim 13, wherein the printed susceptor has a configuration corresponding to the shape of the product being heated.

15. A laminate according to claim 13 or claim 14, comprising also a layer of an insulating material imprinted upon a surface of the laminate in alignment with the printed susceptor and opposite the product to be heated to reduce the loss of heat from the susceptor and to maximize the transmission of heat to the product being heated.

## Patentansprüche

1. Laminat zur Verwendung beim Erhitzen eines Produktes in einem Mikrowellenofen, umfassend (i) als eine Backlage ein Substrat, das aus einem Material gebildet ist, das für Mikrowellenenergie transparent ist, (ii) eine Aufnehmschicht als ein Deckblättchen auf der Backschicht, wobei das Blättchen eine ausgehärtete Dispersion eines organischen Druckfarbenvehikels umfaßt, um als ein Film zu dienen, der eine Matrix bildet, in welcher zumindest zwei Typen von dispergierten und miteinander vermischten Partikeln gleichmäßig und homogen suspendiert sind, wobei ein Typ elektrisch leitende, mikrowelleninteraktive Kohlenstoffteilchen und der andere Typ elektrisch nicht leitende Dämpfteilchen umfaßt, die nicht interaktiv mit Mikrowellenenergie sind und ein suspendiertes Mineralpuder zum Dissipieren, Verteilen oder Modulieren der Energie umfaßt, die von den Leitteilchen empfangen werden, und (iii) (a) ein mikrowellentransparentes Lagenmaterial, das auf die Aufnehmschicht aufgebondet ist, um die Aufnehmschicht zwischen dem Substrat und der überliegenden Materialschicht einzuschließen, oder (b) eine Wärmeisolierungsabdeckung, die auf die Oberfläche des Laminats in Ausrichtung mit dem Aufnehmer aufgeprägt ist, um die Wärmeverluste der Aufnehmers zu reduzieren und die Wärmeübertragung zu dem zu heizenden Produkt zu maximieren.

2. Laminat nach Anspruch 1, dadurch gekennzeichnet, daß das Substrat und das überliegende Schichtmaterial beide Papier- oder Papiertafelschichten umfassen, die mittels einer Klebeschicht aneinander gebondet sind, und daß die gedruckte Aufnehmschicht selbstklebend mit der Substratpapierschicht verbunden ist.

3. Laminat nach einem der Ansprüche 1 oder 2, dadurch gekennzeichnet, daß die gedruckte Aufnehmschicht verschiedene Mengen an in den unterschiedlichen Bereichen aufgedruckter Farbe, hat, um dort eine größere Wärmemenge zu liefern, wo eine größere Farbmenge bereitgestellt ist.

4. Laminat nach Anspruch 3, dadurch gekennzeichnet, daß einige der gedruckten Bereiche die Form eines Musters haben, wobei offene, nicht bedruckte Bereiche einen ausgewählten Prozentsatz davon einnehmen.

5. Laminat nach Anspruch 4, dadurch gekennzeichnet, daß ein Mittelbereich der Aufnehmschicht solider gedruckt ist als ein Randbereich derselben, um eine größere Wärmemenge im Zentrum und eine reduzierte Wärmemenge in Richtung des Außenumfangs zu liefern.

6. Laminat nach irgendeinem der Ansprüche 1 bis 5, dadurch gekennzeichnet, daß die gedruckte Aufnehmschicht auch Metallteilchen umfaßt.

7. Laminat nach Anspruch 6, dadurch gekennzeichnet, daß die Metallteilchen Aluminium-, Bronze- oder Nickelflocken umfassen.

8. Laminat nach irgendeinem der Ansprüche 1 bis 7, dadurch gekennzeichnet, daß die Dämpfteilchen Teilchen eines Materials sind, das aus TiO₂, ZnO₂, Ton, Calciumcarbonat, Natriumsilikat, Bariumsulfat, Aluminiumoxid, Aluminiumsulfat, Bleiweiß und Antimonoxid ausgewählt ist.

9. Laminat nach irgendeinem der Ansprüche 1 bis 8, dadurch gekennzeichnet, daß das Druckfarbenvehikel eine Flüssigdispersion eines Lösungsmittels und eines Mitglieds, das ausgewählt ist aus Acrylharz, Maleinharz, Protein und Schellack, ist.

10. Laminat nach Anspruch 9, dadurch gekennzeichnet, daß das Vehikel eine kleine Menge von einem Polyalkohol, einem Wachs und einem Amin enthält, um die Charakteristiken der Druckfarbe zu modifizieren.

11. Laminat nach irgendeinem der Ansprüche 1 bis 10, dadurch gekennzeichnet, daß das überliegende Schichtmaterial die Wärmeisolationsabdeckung trägt.

12. Laminat nach Anspruch 11, dadurch gekennzeichnet, daß die Isolationsabdeckungsschicht aus Ton besteht.

13. Laminat für Mikrowellenerhitzung eines in einem Mikrowellenofens zu erhitzenden paketierten Produkts, das (a) zumindest zwei Trageschichten aus einem dielektrischen Material, von denen eines als ein Aufnehmsubstrat dient, und (b) einen Mikrowellenaufnehmer umfaßt, der aus einer Mikrowelleninduktionssubstanz zusammengesetzt ist, die eine Druckfarbenschicht enthält, die auf einer der Lagen oberhalb eines ausgewählten Bereichs auf ihre Oberfläche in Ausrichtung mit dem zu heizenden paketierten Produkts aufgedruckt ist, wobei die Lagen Seite an Seite mit der Druckfarbenschicht verbunden sind, die zwischen den Schichten angeordnet ist, um ein Zweischichtenlaminat aus dielektrischem Material als eine Tragestruktur für die Druckfarbenschicht zu liefern, wobei die Druckfarbenschicht elektrisch nicht leitende Dämpfteilchen enthält, die nicht mit Mikrowellenenergie interaktiv sind, um unerwünschtes Überhitzen, Funkenbilden oder Anbrennen zu verhindern, wenn der Aufnehmer mit Mikrowellenenergie bestrahlt wird.

14. Laminat nach Anspruch 13, dadurch gekennzeichnet, daß der gedruckte Aufnehmer einen Aufbau aufweist, der der Form des geheizt werdenden Produkts entspricht.

15. Laminat nach Anspruch 13 oder 14, dadurch gekennzeichnet, daß es auch eine Lage aus einem Isolationsmaterial umfaßt, das auf eine Oberfläche des Laminats in Ausrichtung mit dem gedruckten Aufnehmer und gegenüber dem zu erhitzenden Produkt eingedruck ist, um die Wärmeverluste von dem Aufnehmer zu reduzieren und die Wärmeübertragung zu dem geheizt werdenden Produkt zu maximieren.

## Revendications

1. Stratifié destiné à être utilisé pour le chauffage d'un produit dans un four à micro-ondes, comprenant (i) comme feuille de support, un substrat formé d'un matériau laissant passer l'énergie à micro-ondes, (ii) une couche imprimée formant suscepteur en tant que couche de revêtement déposé sur la feuille de support, cette couche comprenant une dispersion durcie d'un véhicule d'encre d'impression organique destiné à servir de matrice formant dans laquelle au moins deux types de particules dispersées et mélangées entre elles sont suspendues d'une manière uniforme et homogène, l'un des types comprenant des particules de carbone électriquement conductrices interactives avec les micro-ondes, et l'autre type comprenant des particules d'atténuation, non conductrices électriquement, qui ne sont pas interactives avec l'énergie à micro-ondes et qui comprennent une poudre minérale en suspension servant à dissiper, étaler ou moduler l'énergie reçue par les particules conductrices, et (iii) (a) un matériau en forme de feuille laissant passer les micro-ondes et fixé sur la couche formant suscepteur pour renfermer une telle couche formant suscepteur entre le substrat et le matériau en forme de couche surjacent, ou (b) un revêtement thermiquement isolant imprimé sur une surface du stratifié, en alignement avec le suscepteur, pour réduire la perte de chaleur en provenance du suscepteur et rendre maximale la transmission de chaleur en direction du produit devant être chauffé.

2. Stratifié selon la revendication 1, dans lequel le substrat et le matériau en forme de feuille surjacente comprennent tous deux des feuilles de papier ou de carton, qui sont réunies entre elles au moyen d'une couche d'adhésif, et la couche imprimée formant suscepteur est fixée par autoadhérence à la feuille de papier formant substrat.

3. Stratifié selon l'une quelconque de revendications 1 ou 2, dans lequel la couche imprimée formant suscepteur possède des quantités différentes d'encre imprimées dans différentes zones pour fournir un degré de chauffage plus important à l'endroit où une plus grande quantité d'encre est prévue.

4. Stratifié selon la revendication 3, dans lequel certaines des zones imprimées se présentent sous la forme d'une configuration comportant des zones ouvertes non imprimées correspondant à un pourcentage sélectionné desdites zones.

5. Stratifié selon la revendication 4, dans lequel une partie centrale de la couche du suscepteur est imprimée d'une manière plus solide qu'une partie périphérique de cette couche de manière qui soient délivrées une plus grande quantité de chaleur au centre et une quantité réduite de chaleur en direction de la périphérie.

6. Stratifié selon l'une quelconque des revendications 1 à 5, dans lequel la couche imprimée formant suscepteur comprend également des particules métalliques.

7. Stratifié selon la revendication 6, dans lequel les particules métalliques comprennent des paillettes d'aluminium, de bronze ou de nickel.

8. Stratifié selon l'une quelconque des revendications 1 à 7, dans lequel les particules d'atténuation sont des particules d'un matériau choisi parmi TiO2, ZnO2, argile, carbonate de calcium, silicate de sodium, sulfate de baryum, oxyde d'aluminium, sulfate d'aluminium, blanc de plomb et oxyde d'antimoine.

9. Stratifié selon l'une quelconque des revendications 1 à 8, dans lequel le véhicule d'encre d'impression est une dispersion fluide d'un solvant et un élément choisi parmi une résine acrylique, une résine maléïque, une protéine et de la gomme - laque.

10. Stratifié selon la revendication 9, dans lequel le véhicule contient une faible quantité d'un alcool polyhydrique, d'une cire et d'une amine servant à modifier les caractéristiques de l'encre.

11. Stratifié selon l'une quelconque des revendications 1 à 10, dans lequel le matériau de la feuille surjacente porte le revêtement thermiquement isolant.

12. Stratifié selon la revendication 11, dans lequel la couche de revêtement isolant est formée d'argile.

13. Stratifié pour le chauffage par micro-ondes d'un produit emballé destiné à être chauffé dans un four à micro-ondes, comprenant (a) au moins deux feuilles de support en matériau diélectrique, dont l'une sert de substrat pour un suscepteur, et (b) un suscepteur pour micro-ondes constitué par une couche d'encre contenant une substance inductive pour micro-ondes et imprimée sur l'une des feuilles, dans une partie choisie de sa surface en alignement avec le produit emballé devant être chauffé, les feuilles étant réunies l'une à l'autre face à face en enserrant entre elles la couche d'encre, de manière à former un stratifié formé de deux couches de matériau diélectrique en tant que structure de support pour la couche d'encre, la couche d'encre contenant des particules d'atténuation électriquement non conductrices, qui ne sont pas interactives avec l'énergie à micro-ondes, pour empêcher une surchauffe, une formation d'étincelles ou un brûlage indésirables, lorsque le suscepteur est exposé à l'énergie à micro-ondes.

14. Stratifié selon la revendication 13, dans lequel le suscepteur imprimé possède une configuration qui correspond à la forme du produit chauffé.

15. Stratifié selon la revendication 13 ou 14, comprenant également une couche d'un matériau isolant imprimé sur une surface du stratifié en alignement avec le suscepteur imprimé et située en vis-à-vis du produit à chauffer pour réduire la partie de la chaleur délivrée par le suscepteur et rendre maximale la transmission de chaleur au produit chauffé.
